# EUROPEAN PATENT SPECIFICATION

(11) **EP 3 982 781 B1**
(45) Date of publication and mention of the grant of the patent: **03.04.2024**
(21) Application number: 20751761.6
(22) Date of filing: 12.06.2020
(51) Int. Cl.: A43B 13/02, A43B 13/12, A43B 13/14, B29D 35/08

(54) **FOOTWEAR ARTICLE WITH A PLATE AND METHOD FOR CUSTOMIZING SUCH A FOOTWEAR ARTICLE.**
SCHUHARTIKEL MIT EINER PLATTE UND VERFAHREN ZUR ANPASSUNG EINES SOLCHEN SCHUHARTIKELS
ARTICLE CHAUSSANT DOTÉ D'UNE PLAQUE ET PROCÉDÉ DE PERSONNALISATION D'UN TEL ARTICLE CHAUSSANT

(30) Priority: 14.06.2019 FR 1906427
(43) Date of publication of application: 20.04.2022
(73) Proprietor: The North Face Apparel Corp., Wilmington, DE 19810 (US)
(72) Inventor: LAVERTY, Gregoire, Wilmington, Delaware 19810 (US)
(74) Representative: Riesen, Michael J.
(86) International application number: PCT/US2020/037396
(87) International publication number: WO 2020/252236

(56) References cited:
- WO-A1-2019/118276
- FR-A1- 2 775 875
- KR-A- 20190 031 520
- US-A1- 2015 173 456

## Description

### BACKGROUND

Shoes may have various components or layers such as an outsole, a midsole, and an upper.

EP 3 114 955 describes a rubber outsole is attached to a first comfort sole made of expanded polyurethane. A second ethylene -vinyl acetate (EVA) comfort sole is perforated, so that the upper is attached to the first sole and the second comfort sole. The expanded polyurethane increases the cushioning effect of the first comfort sole.

FR 2 898 252 describes an athletic shoe having a two-part composite material insert is attached to the outsole and the comfort sole at the heel and attached to the comfort sole and the upper at the toe of the shoe. This part of the composite material insert increases the elasticity of the toe of the shoe.

U.S. Pat. Pub. No. 2014/0075778, titled "Sole Structures and Articles of Footwear Having Plate Moderated Fluid-Filled Bladders and/or Foam Type Impact Force Attenuation Members" describes sole structures for articles of footwear, including athletic footwear, include: (a) an outsole component; (b) a midsole component engaged with the outsole component, wherein the midsole component includes at least one opening or receptacle; (c) at least one fluid-filled bladder system or foam system provided in the opening or receptacle; and/or (d) a rigid plate system including one or more rigid plates overlaying the fluid-filled bladder or foam system(s). The rigid plate(s) may be fixed directly to the midsole component or the rigid plate(s) may rest on the fluid-filled bladder(s) or foam somewhat above the surface of the midsole component when the sole structure is in an uncompressed condition. Articles of footwear and methods of making sole structures and articles of footwear including such sole structures also are described.

U.S. Pat. No. 6,990,755, titled "Article of footwear with a stretchable upper and an articulated sole structure", describes an article of footwear is disclosed that includes at least one of a stretchable upper and an articulated sole structure. The upper may include an exterior layer and an interior layer. The exterior layer forms at least a portion of an exterior of the upper, and the exterior layer includes a plurality of incisions that extend through the exterior layer. The interior layer is located adjacent an inner surface of the exterior layer, and the interior layer is exposed through the incisions. The sole structure may include a connecting portion and a plurality of discrete sole elements. The connecting portion is positioned adjacent the upper and may extend along a longitudinal length of the upper. The sole elements extend from the connecting portion, and the sole elements are separated by a plurality of sipes that extend upward into the sole structure.

U.S. Pat. Pub. No. 2018/0168281, titled "Energy return footwear plate", and dated June 21, 2018, describes a sole plate for an article of footwear comprises a plate body having a first side, a second side, an outer perimeter, at least one opening extending through the plate body from the first side to the second side, and an inner perimeter bounding the at least one opening. The plate body is biased to a first orientation of the inner perimeter relative to the outer perimeter. The plate body inverts at the inner perimeter relative to the outer perimeter under a dynamic load applied to the second side. The plate body resiliently returns to the first orientation upon removal of the dynamic load. A sole structure and an article of footwear including the sole plate are disclosed. A method of manufacturing an article of footwear with the sole plate is disclosed.

U.S. Pat. No. 10,226,097, titled "Footwear sole structure with nonlinear bending stiffness", and dated March 12, 2019, describes a sole structure for an article of footwear comprises a first plate and a second plate. The first plate overlies at least a portion of a forefoot region of the second plate. The first plate and the second plate are fixed to one another rearward of the forefoot region. The first plate is configured to slide longitudinally relative to the forefoot region of the second plate in a first portion of a flexion range during dorsiflexion of the sole structure, and to interfere with the second plate during a second portion of the flexion range that includes flex angles greater than in the first portion of the flexion range.

U.S. Pat. Pub. No. 2017/0095033, titled "Plate for footwear", describes a plate for an article of footwear having a sole structure includes an anterior-most point disposed in a forefoot region of the sole structure, a posterior-most point disposed closer to a heel region of the sole structure than the anterior-most point, and a concave portion extending between the anterior-most point and the posterior-most point. The concave portion includes a constant radius of curvature from the anterior-most point to a metarsophalangeal (MTP) point of the sole structure. The MTP point opposes the MTP joint of a foot during use.

U.S. Pat. Pub. No. 2016/0000180, titled "Article of footwear with a segmented plate having a heel region", describes an article of footwear may generally include a sole comprising a first plate and a second plate. The first plate includes a first edge, and the second plate includes a second edge, where the first edge faces the second edge. The first edge has a first contour corresponding to a second contour of the second edge. The first plate includes a heel region, where the heel region includes a first heel region and a second heel region. A notch region separates the first heel region and the second heel region, where the notch region extends from an outer edge of the heel region toward the midfoot portion of the article of footwear. The first plate and second plate may improve an amount of energy return while running by increasing a rigidity of the sole.

U.S. Pat. Pub. No. 2018/0132564, titled "Plate with foam for footwear", describes a sole structure for an article of footwear having an upper includes an outsole defining a first aperture, a cushioning member disposed on the outsole and defining a second aperture, and a plate disposed between the cushioning member and the upper. The plate includes an anterior-most point disposed in a forefoot region, a posterior-most point disposed closer to a heel region than the anterior-most point, a metatarsophalangeal (MTP) point disposed between the anterior-most point and the posterior-most point, and an anterior curved region having a radius of curvature extending through the forefoot region and a mid-foot region and including a forefoot curved portion extending from the MTP point to the anterior-most point and a mid-foot curved portion extending from the MTP point toward the posterior-most point. Overlapping portions of the first aperture and the second aperture expose a region of the plate.

U.S. Pat. Pub. No. 2018/0116335, titled "Footwear Sole Structure Including a Spring Plate", describes an article of footwear may include an upper, an outsole, and a spring plate. The spring plate may be located above at least a portion of the outsole and may extend through at least medial forefoot and medial midfoot regions. The spring plate may have an unloaded shape in which a front portion of the spring plate in a forefoot region is downwardly bent relative to a rear portion of the spring plate located rearward of the front portion. The spring plate may comprise an open central region defined by a surrounding band and may be nondestructively removable from and replaceable into the upper. The article may further include at least one inner sole member shaped to rest securely within a void defined at least in part by the upper. The at least one inner sole member may be compressible in at least first and fifth metatarsophalangeal j oint regions.

U.S. Pat. Pub. No. 2015/173456 describes an article of footwear according to the preamble of the independent claim 1.

U.S. Pat. No. 8,613,149, titled "Footwear incorporating a composite plate sole structure", describes an article of footwear has an upper and a sole structure secured to the upper. The sole structure includes a plate and a core. The plate has a ground portion and a footbed portion, with a periphery of the footbed portion being secured to the ground portion to define a cavity between the ground portion and the footbed portion. The core is located within the cavity. Whereas the plate may be formed from a composite material, the core may be formed from a polymer foam material.

U.S. Pat. Pub. No. 2012/0317835, titled "Shoe", describes a shoe with a curved rocker bottom sole member with an H-shaped pad that is decoupled from the sole member. The shoe promotes a mid-foot region footstrike and a more even distribution of pressure.

U.S. Pat. Pub. No. 2012/0204449, titled "Shoe", describes a shoe having an upper and a curved sole member, the sole member may be comprised of one unitary piece or a separate midsole and a separate outsole. The curvature results from the sole member tilting along a center of mass axis that extends through a point in the vicinity of the lateral side of the heel region of the sole member to a point in the vicinity of the medial side of forefoot region of the sole member. The center of mass axis runs diagonally along the entire length of the shoe. Due to the curvature, the sole member has a non-uniform thickness. The curvature of the sole member allows the user's foot to be guided in a more natural motion providing more movement efficiency and comfort.

U.S. Pat. No. 7,779,557, titled "Shoe", describes a shoe having a toe region, a middle region, a heel region, and a multi-layer, multi-density midsole wherein an upper layer of the midsole has a bottom surface that has a longitudinal convexity and a longitudinal concavity, the longitudinal convexity typically occupying a substantial portion of the toe region or a substantial portion of the toe region and middle region, and the longitudinal concavity typically occupying a substantial portion of the heel region, the longitudinal convexity and the longitudinal concavity collectively contributing to simulating the effect, and imparting the fitness benefits, of walking on a sandy beach or on a giving or uneven surface regardless of the actual hardness of the surface.

U.S. Pat. No. 5,315,769, titled "Teardrop propulsion plate footwear", describes an athletic shoe with a teardrop shaped spring plate in combination with a dynamic fluid heel pad and a viscoelastic midsole, such spring plate being basically symmetrical about its longitudinal axis, and lying forwardly of the fluid pad, having its widest dimension beneath the metatarsal head area and curving gradually up and beneath the phalanges. The spring plate, of multiple layers of parallel fibers embedded in polymer, combines with the heel pad to effect foot control stability, as well as extending useful life to the midsole and footwear.

U.S. Pat. No. 5,191,727, titled "Propulsion plate hydrodynamic footwear" describes an athletic shoe having a hydrodynamic heel insert pad in the midsole to above a specially configured spring plate which extends beneath the medial but not the lateral portion of the heel, through the arch region, to and beneath the metatarsal head region and toe region, serving to eliminate the force spike at heel impact in combination with foot control as the foot proceeds via complex movements through the gait cycle, and efficient toe off.

U.S. Pat. No. 5,052,130, titled "Spring plate shoe" describes an athletic shoe with a spring plate in combination with a viscoelastic midsole, such spring plate extending substantially the length of the midsole from the medial side of the heel through the arch where the spring plate is curvilinear and on the exterior of the shoe, through the metatarsal head area and beneath the toes. The spring plate is of multiple layers, each of parallel carbon fibers embedded in polymer, the fibers being at acute angles in successive layers, in symmetry. The stiffness of the plate is anisotropic, being greater longitudinally than laterally. The thickness of the plate forward of the metatarsal break line is half that of the plate rearwardly of the break line.

However, improvements are needed.

### SUMMARY

The present disclosure relates generally to footwear comprising a customizable plate (e.g., support plate, shell). As an example, a plate may be formed from a material that is rigid at a first temperature (e.g., room temperature, ambient temperature), but can be heated and molded to a custom shape and then allowed to cool to become rigid again. As such, footwear with a single customizable plate may be configured in various custom shapes without having to reproduce the entire footwear. Customization may be based on a particular target foot shape. Customization may be based on a target activity or intended use. As the activity or use changes, the plate may be heated and molded and then allowed to cool to provide rigid support in the new configuration.

It should be understood that conventional injection molded thermoplastics or thermosets used for footwear support plates have melting points of greater than 100°C (e.g., 120°C). A melt point of greater than 100°C may make the heating and reformation of a support plate impractical. As such, a support plate in accordance with the present disclosure is formed from a composition having a melt temperature of 70°C or lower. Other ranges may be used such as less than 100°C, less than 90°C, less than 80°C, less than 70°C, about 70°C.

Footwear in accordance with the present disclosure is disclosed by the subject-matter of independent claim 1, while a method for customizing such a footwear is disclosed by the subject-matter of independent claim 12.

The plate may comprise a sidewall that forms an edge around the plate bottom to allow the plate to stabilize the foot vis-a-vis the ground during a stride, on the one hand. The foot enclosed by the upper is thus kept in the alignment held by the shoe at the time of the impact of the heel with the ground. On the other hand, the edge of the plate sidewall (e.g., plate side) increases the plate's flexional and torsional rigidity. This arrangement is more specifically suitable for road running.

The plate sidewall may surround a portion of the plate bottom corresponding to the heel and is disconnected along a portion of said plate bottom corresponding to the toe. The disconnection of the plate side gives the toe of the shoe flexibility while maintaining stiffness in the heel. This arrangement is more specifically suitable for track running.

The plate sidewall may form an edge around the plate bottom.

The plate sidewall may form an edge around the plate bottom to allow the plate to stabilize the foot vis-a-vis the ground during a stride, on the one hand. The foot enclosed by the upper is thus kept in the alignment held by the shoe at the time of the impact of the heel with the ground. On the other hand, the edge of the plate sidewall increases the plate's flexional and torsional rigidity. This arrangement is more specifically suitable for road running.

The plate sidewall may comprise notches. Such notches may vary the stiffness of the plate by delimiting rigid sections of the plate sidewall, causing flexibility between the sections due to the notches. It is particularly suitable for mountain runs, known as "trail running".

The plate bottom may be perforated. A perforated plate bottom makes it possible to reduce the weight of the plate while maintaining the rigidity supplied by the plate side.

The comfort sole may have a radius of curvature at all points of a line from the heel to the toe and creates an interface with the outsole. The curvature of the comfort sole eliminates the overlap effect of the initial impact felt with a comfort sole without curvature. The transition between the impact and the roll of the foot is instantaneous. Combined with the stiffness of the composite plate, the bend of the comfort sole promotes the return of energy and thereby permitting faster, and therefore more powerful, strides.

Other advantages of the present disclosure will emerge in the description of embodiments illustrated by the drawings.

### BRIEF DESCRIPTION OF THE DRAWINGS

The following drawings show generally, by way of example, but not by way of limitation, various examples discussed in the present disclosure. In the drawings:
Figure 1 is a side view of a shoe according to an aspect of the present disclosure.
Figure 2 is an exploded view of the shoe of Figure 1.
Figure 3 is a view along cross-section A-A' of Figure 1.
Figure 4 is a side view of a shoe according to an aspect of the present disclosure.
Figure 5 is an exploded view of the shoe of Figure 4.
Figure 6 is a view along cross-section B-B' of Figure 4.

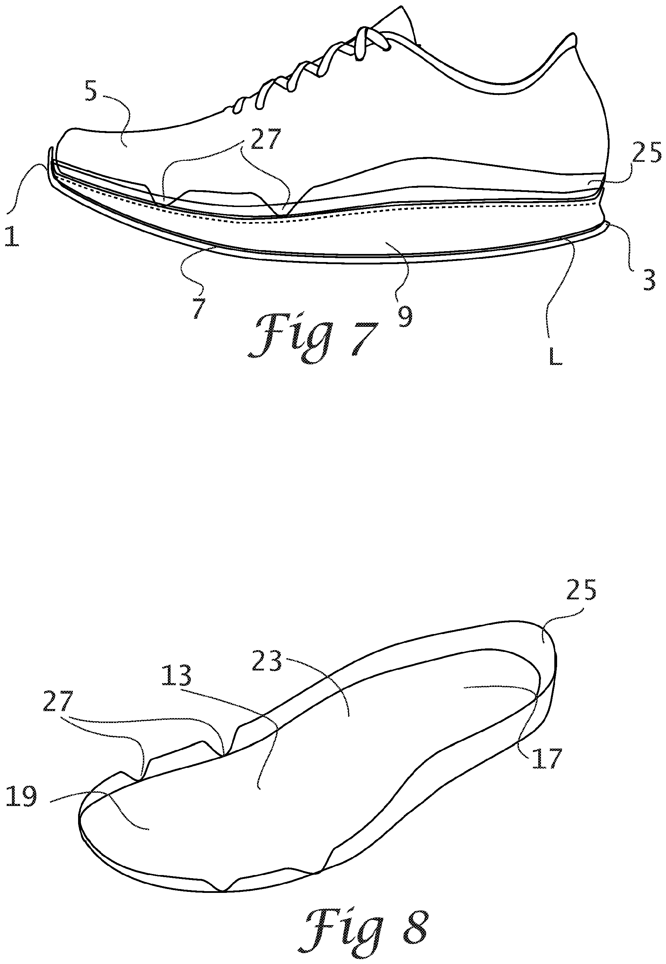

Figure 7 is a side view of a shoe according to an aspect of the present disclosure.
Figure 8 is a perspective view of a plate in accordance with the present disclosure.
Figure 9 is a side view of a shoe according to an aspect of the present disclosure.
Figure 10 is a perspective view of a plate in accordance with the present disclosure.
Figure 11 illustrates a top view of a custom plate in accordance with the present disclosure.
Figure 12 illustrates a side view of the custom plate of Figure 11.

### DETAILED DESCRIPTION

The systems and/or methods described herein allow customization of a plate (e.g., support plate, shell, etc.) shape to a specific foot anatomy of wearer of a shoe. The plate may be located between an upper and a foam midsole or comfort sole. Such a location of the plate relative to a foot may allow the plate to stabilize the foot because of rigid sidewalls of the plate and a geometry of the plate that goes from a heel of the foot to toes of the foot. The plate may be disposed in close proximity to a foot of a wearer, spaced by an insole or some other separator. Although other arrangements may be used. In certain aspects, the rigidity of the plate may make it undesirable to place the plate directly against the foot of the wearer. In such circumstances, an insole or softer layer may be interposed between the plate and the foot. However, the proximity of the plate to the foot may impart desirable support to the wearer.

A shape and/or position of the plate may allow the plate to be customized to a shape of the wearer of the shoe. The plate may conform to a plantar shape of the foot to provide a match between the foot and a bottom of the upper. A width of the plate may be shaped because of the sidewalls.

The plate may comprise a composite material made with a thermoplastic matrix. The plate may comprise a glass and/or carbon fiber material with a thermoplastic (e.g., polyurethane) that has a low melting point temperature (e.g., less than 100°C, less than 90°C, less than 80°C, less than 70°C, about 70°C). The plate may comprise a resin that comprises a property that allows the plate to be shaped at relatively low temperatures (e.g., less than 100°C, less than 90°C, less than 80°C, less than 70°C, about 70°C). The plate may comprise material that is stiff at ambient temperatures so that the plate plays a supportive role when the shoe is worn in normal conditions.

The plate may be a rigid plate inserted between the upper and the midsole from heel to toes. The plate may comprise a three dimensional (3D) shape allowing for vertical sidewalls. The plate may extend on a lateral and/or medial side of the foot. The plate may wrap the heel.

The plate may be made with a low melting temperature thermoplastic material (injection and/or composite with a thermoplastic matrix) that allows for shape modification when the shoe is heated. The geometry of the plate may fix (e.g., set, establish, etc.) the geometry of the shoe in one configuration. A configuration may comprise a toe spring, heel width, and/or forefoot width.

Systems and/or methods described herein may allow the shoes to be heated at around 60°C. The plate may become softer and ready to be shaped for specific usage (terrain, speed, body specs, etc.). The plate may become softer and ready to be shaped for a specific foot shape. When the shoe cools down, the plate may become rigid again, fixing (e.g., setting, establishing, etc.) the geometry of the shoe into its newly formed position.

Customization of the shoe may be made by heating the shoe and then pressing the plate by hand to adjust the geometry to the foot. Customization of the shoe may be made by heating the shoe and molding the plate manually or using a device, such as a vacuum machine, to manipulate the shoe and re-mold the plate into a custom shape and configuration.

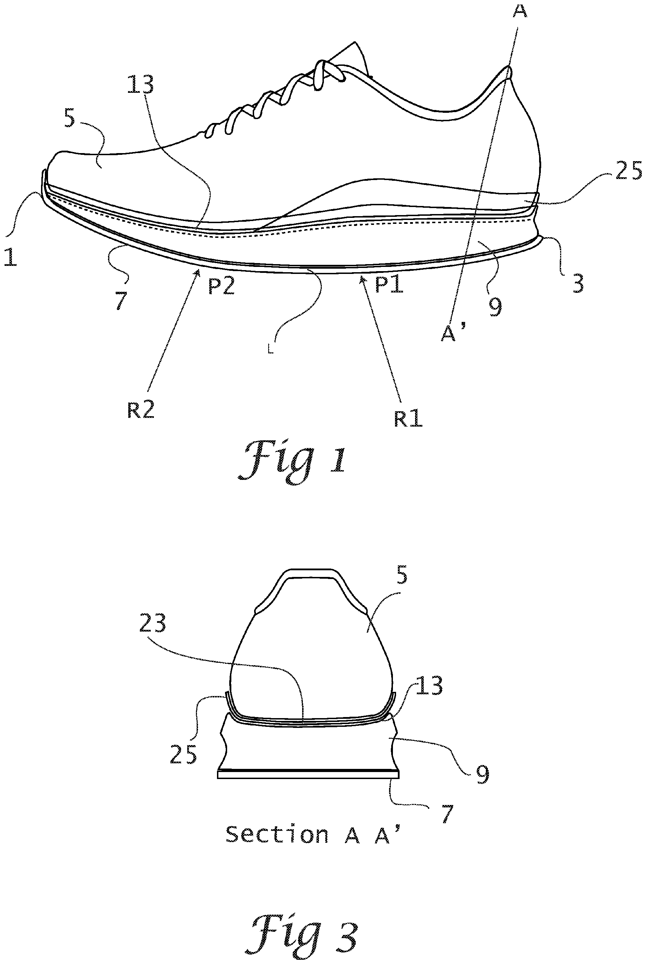

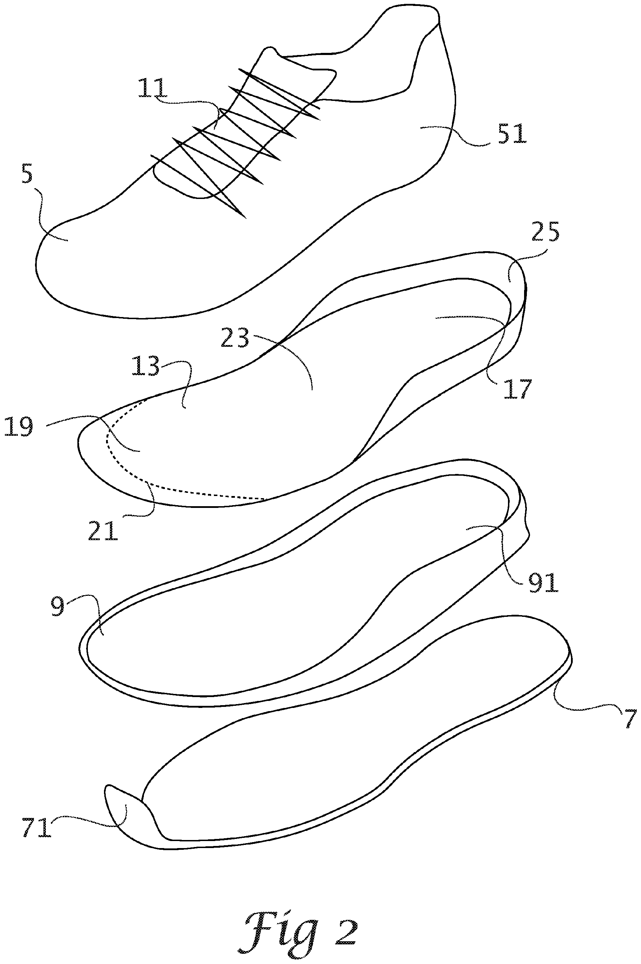

FIGS. 1-3 show an athletic shoe that extends between a toe 1 and a heel 3 and comprises an upper 5 attached to an outsole 7 via a comfort sole 9.

The outsole 7 may be made of an adherent material such as a rubber and is intended to provide a good grip on the ground and good resistance to abrasion. The comfort sole 9 may act as a shock absorber and absorbs shocks during the shoe's contact with the ground, in particular by the heel 3. The comfort sole 9 may also control torsional and flexional rigidity characteristics. The upper 5 may serve to keep the foot enclosed in the shoe, and for this purpose, it may be provided with a closure system 11 using laces or quick fastener strips. The outsole 7 and the comfort sole 9 may be connected to each other, for example by gluing from the toe 1 to the heel 3. Other coupling mechanisms may be used. The outsole 7 may be equipped with a tip 71 at the toe 1 of the shoe.

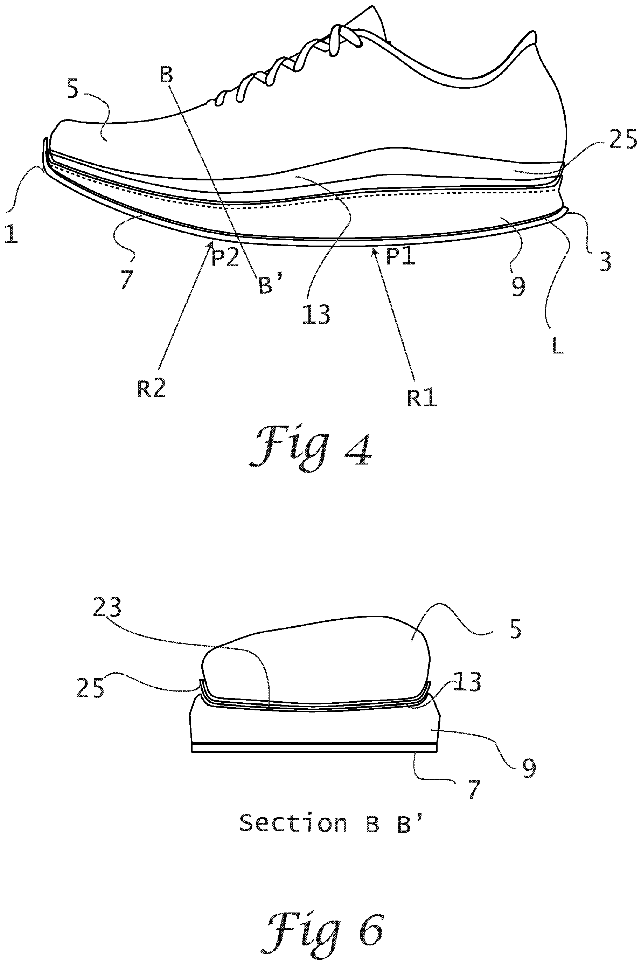

The comfort sole 9 may have a radius of curvature R at any point P on line L from heel 3 to toe 1. In FIG. 1 and FIG. 4, points P1 and P2 of line L have radii of curvature R1 and R2. The curvature of comfort sole 9 eliminates the overlap effect of the initial impact felt with a comfort sole without curvature. The transition between the impact and the roll of the foot is instantaneous. Combined with the stiffness of the plate 13, the bend of the comfort sole 9 promotes the return of energy and thereby permitting faster, and therefore more powerful, strides.

According to the present disclosure, footwear such as a shoe comprises a plate 13. The plate 13 may comprise plastic, polymer, and/or composite material. The plate 13 may be disposed between the upper 5 and the comfort sole 9. Corresponding to the heel 3 of the shoe, a rear portion 51 of the upper 5 may be coupled, for example, glued to a rear portion 17 of the plate 13, and likewise, the rear portion 17 may be coupled to a rear portion 91 of the comfort sole 9. Various coupling means may be used such as gluing or cementing.

As shown in FIGS. 1-3, the plate 13 extends from a rear portion 17 corresponding to the heel 3, to a front portion 19 corresponding to the toe 1. However, plate 13 may be configured to only extend for a distance less than the distance between the heel 3 and the toe 1. As a non-limiting example, an end 21 of the front portion 19 of the plate 13 is shown at a distance from the rear portion 17 that is less than the distance between the heel 3 and the toe 1 of the shoe. In this case, the upper 5 may be in direct contact with the comfort sole 9 in the part of the toe 1 of the shoe where the plate 13 is not disposed.

Plate 13 is inserted between upper 5 and comfort sole 9 and attached to these two elements by heel 3 in order to impart, on the one hand, torsional and flexional rigidity to the upper.

During the impact of the heel 3 of the shoe and the ground, plate 13 counteracts displacement of the foot enclosed in upper 5, thus contributing to the stability of the support. On the other hand, the plate is made of plastic or composite material to allow a fraction of the energy released by the impact to be restored during relaxation by reducing the fraction of energy dissipated by the comfort sole.

The plate 13 may be coupled to the upper 5 and/or the comfort sole 9 via a plate bottom 23 and a plate side 25 or sidewall. As shown in FIGS. 1-3, the plate side 25 surrounds the plate bottom 23 along the rear portion 17 of the plate 13 corresponding to the heel 1 and is disconnected along the plate bottom 23 at the front portion 19 of the plate 13 corresponding to the toe 1. The disconnection of the plate side 25 may give the toe 1 of the shoe flexibility while maintaining stiffness in the heel 3. This arrangement may be more specifically suitable for track running.

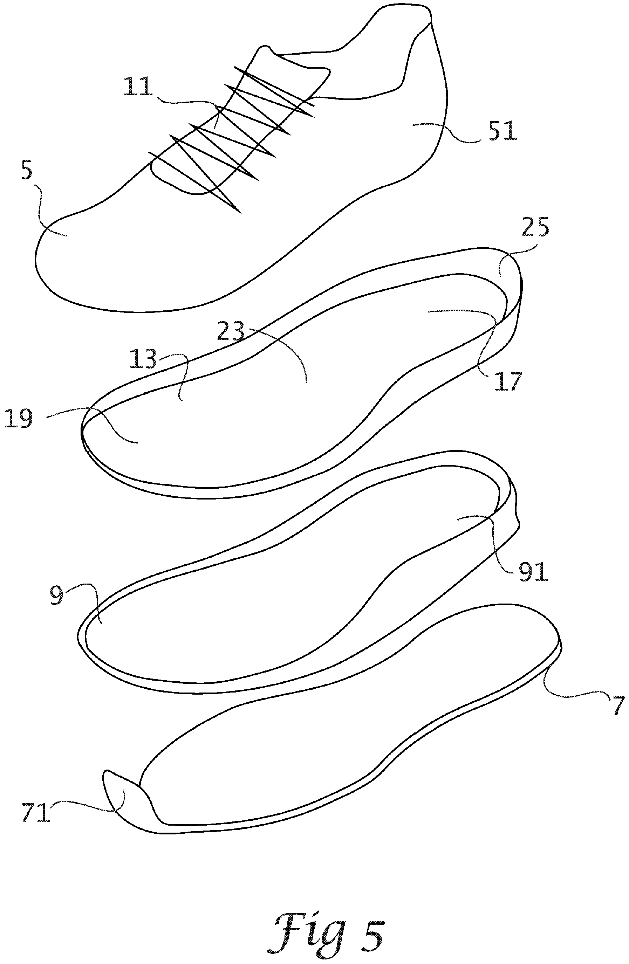

FIGS. 4-6, illustrates a plate 13' having a plate side 25' that forms an edge around plate bottom 23. Similar components are referenced using the same numeral. Certain variations are references using the prime (') symbols. The plate side 25' may form an edge or sidewall around the plate bottom 23 to allow the plate 13' to stabilize the foot vis-a-vis the ground during a stride, on the one hand. The foot enclosed by the upper 5 is thus kept in the alignment held by the shoe at the time of the impact of the heel 3 with the ground. On the other hand, the periphery of the plate side 25' increases the flexional and torsional rigidity of the plate 13'. Such an arrangement may be suitable for road running.

A stiffness of a plate (e.g., the plate 13, 13') may be varied by delimiting rigid sections of plate side 25, 25', causing flexibility, for example, by disposing notches to space sections of the plate side 25, 25'. Notches 27 may be arranged along the periphery of plate bottom 13, in the front portion 19 of the plate 13. The notches 27 may correspond, for example, to the position of the joints between the metatarsal and the phalanges and between the phalanges and the toes of the foot. This variant of the embodiment is particularly suitable for mountain runs, known as "trail running".

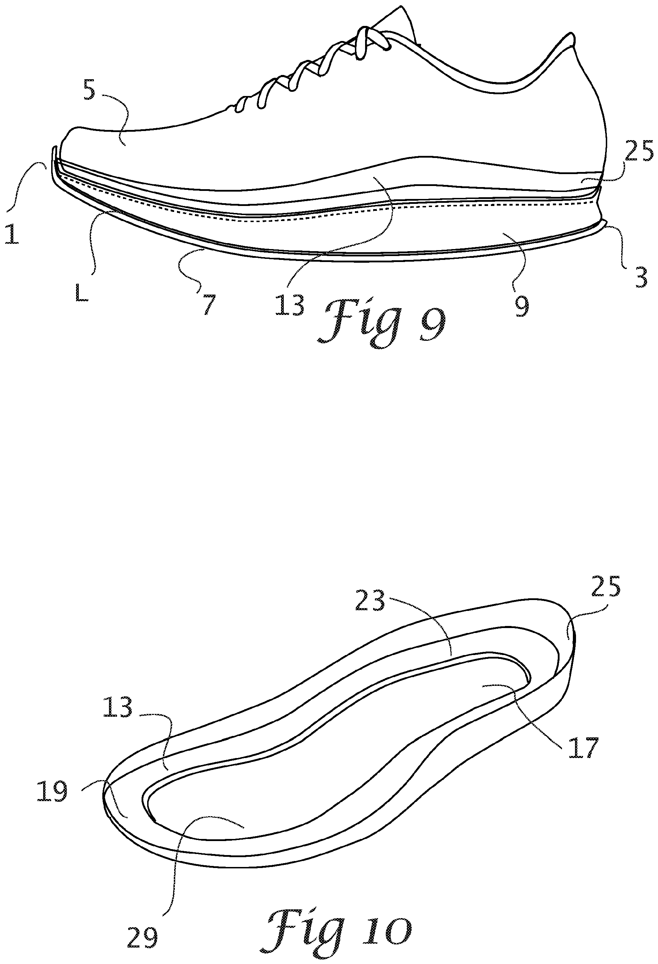

FIGS. 9-10 illustrate a bottom plate 23" that is perforated. A cavity 29 reduces the weight of plate 13" while maintaining the rigidity provided by plate side 25".

A torsional and flexional rigidity of a plate (e.g., the plate 13, 13', 13") may be adjusted for a given material according to its thickness and its geometry, in particular the height of the plate side. The comfort layer may be formed from various materials such as EVA, but it can also be made of a viscoelastic material or a polyurethane foam.

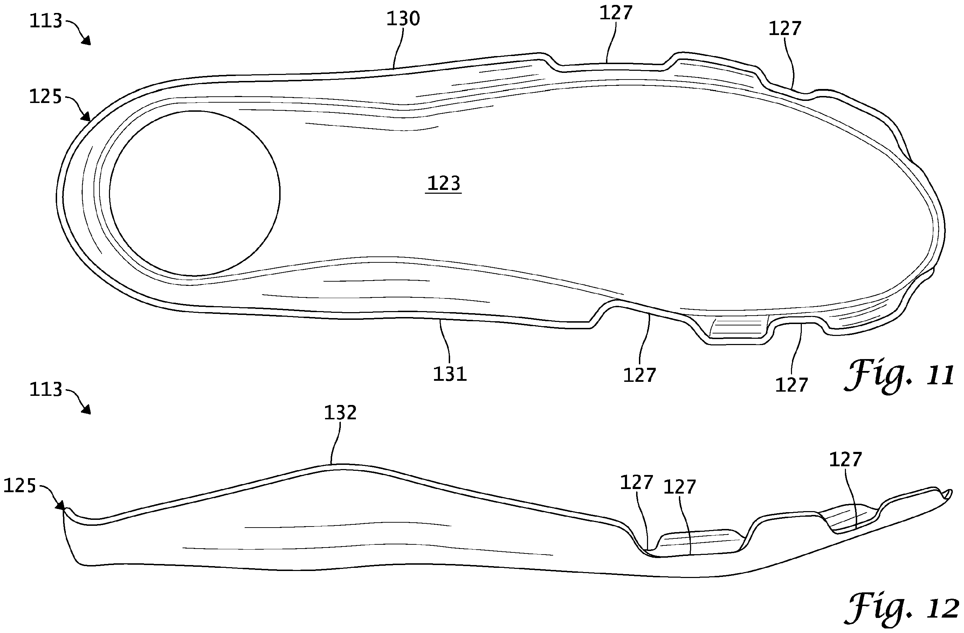

FIGS. 11-12 show a plate 113 in accordance with an aspect of the present disclosure. A footwear article may comprise an outsole configured to engage the ground, as shown and described herein. The footwear article may comprise one or more foam portions (e.g., midsoles) disposed adjacent the outsole. The plate 113 (e.g., support plate) may be disposed such that the one or more foam portions are interposed between the support plate 113 and the outsole. The support plate 113 may comprises a sidewall 125 extending from at least a portion of a periphery of a bottom 123 of the support plate 113. The sidewall 125 may comprise a plurality of notches 127 formed therein.

The support plate 113 may be formed from a composition having a melt temperature of 70°C or lower. The footwear comprising the support plate 113 is capable of being customized by at least: applying heat to the footwear article to raise a temperature of the support plate 113 to less than the melt temperature of the composition of the support plate 113 such that the support plate becomes non-rigid in a first state to allow custom forming of the support plate 113, and allowing the footwear to cool such that the support plate 113 is at a second state having a higher rigidity than the first state.

The sidewall 125 of the support plate 113 may extend vertically along a medial side 130 of the support plate 113. The sidewall 125 of the support plate 113 may extend vertically along a lateral side 131 of the support plate 113. The sidewall 125 of the support plate 113 may extend vertically along a medial side 130 and a lateral side 131 of the support plate 113.

The sidewall 125 may further comprise a ridge 132 extending vertically above an average height of an unnotched portion (e.g., sidewall 125) of the support plate 113.

A method of customizing footwear comprises the steps disclosed by the subject-matter of claim 12.

## Claims

1. A footwear article comprising:
an outsole (7) configured to engage the ground;
a comfort midsole (9) disposed adjacent the outsole (7); and
a support plate (113) disposed such that the comfort midsole (9) is interposed between the support plate (113) and the outsole (7);
wherein the support plate (113) comprises a sidewall (125) extending from at least a portion of a periphery of a bottom (123) of the support plate (113),
wherein the sidewall (125) comprises a plurality of notches (127) formed therein,
**characterized in that**
the support plate (113) is formed from a composition having a melt temperature of 70°C or lower.

2. The footwear article of claim 1, wherein the comfort midsole (9) comprises one or more foam portions.

3. The footwear article of claim 1, wherein the sidewall (125) of the support plate (113) extends vertically along a medial side (130) of the support plate (113).

4. The footwear article of claim 1, wherein the sidewall (125) of the support plate (113) extends vertically along a lateral side (131) of the support plate (113).

5. The footwear article of claim 1, wherein the sidewall (125) of the support (113) plate extends vertically along a medial side (130) and a lateral side (131) of the support plate (113).

6. The footwear article of claim 1, wherein the sidewall (125) of the support plate (113) extends vertically about a periphery of a heel portion of the support plate (113).

7. The footwear article of claim 1, wherein the sidewall (125) further comprises a ridge (132) extending vertically above an average height of an unnotched portion of the support plate (113).

8. The footwear article of claim 7, wherein the ridge (132) is disposed on a medial side (130) of the support plate (113).

9. The footwear article of claim 1, wherein the composition comprises a thermoplastic matrix comprising a base resin and a reinforcing material.

10. The footwear article of claim 9, wherein the reinforcing material comprises glass or carbon fiber, or a combination of both.

11. The footwear article of claim 9, where the base resin comprises polyurethane.

12. A method of customizing the footwear article of any one of claim 1-11, the method comprising:
applying heat to the footwear article to raise a temperature of the support plate to less than the melt temperature of the composition of the support plate such that the support plate becomes non-rigid in a first state;
applying force to the support plate in the first state to customize a shape of the support plate; and
allowing the footwear to cool such that the support plate is at a second state having a higher rigidity than the first state.

13. The method of claim 12, wherein customizing the footwear is based on a target activity usage.

14. The method of claim 12, wherein customizing the footwear is based on a target foot shape.

## Patentansprüche

1. Schuhwerkartikel, umfassend:
eine Laufsohle (7), die konfiguriert ist, um in den Boden einzugreifen;
eine Komfortmittelsohle (9), die angrenzend an die Laufsohle (7) angeordnet ist; und
eine Stützplatte (113), die derart angeordnet ist, dass die Komfortmittelsohle (9) zwischen der Stützplatte (113) und der Laufsohle (7) angeordnet ist;
wobei die Stützplatte (113) eine Seitenwand (125), die sich von mindestens einem Abschnitt eines Umfangs eines Bodens (123) der Stützplatte (113) erstreckt, umfasst,
wobei die Seitenwand (125) eine Vielzahl von darin ausgebildeten Kerben (127) umfasst,
**dadurch gekennzeichnet, dass**
die Stützplatte (113) aus einer Zusammensetzung, die eine Schmelztemperatur von 70 °C oder niedriger aufweist, ausgebildet ist.

2. Schuhwerkartikel nach Anspruch 1, wobei die Komfortmittelsohle (9) einen oder mehrere Schaumstoffabschnitte umfasst.

3. Schuhwerkartikel nach Anspruch 1, wobei sich die Seitenwand (125) der Stützplatte (113) entlang einer medialen Seite (130) der Stützplatte (113) vertikal erstreckt.

4. Schuhwerkartikel nach Anspruch 1, wobei sich die Seitenwand (125) der Stützplatte (113) entlang einer lateralen Seite (131) der Stützplatte (113) vertikal erstreckt.

5. Schuhwerkartikel nach Anspruch 1, wobei sich die Seitenwand (125) der Stütz(113)platte entlang einer medialen Seite (130) und einer lateralen Seite (131) der Stützplatte (113) vertikal erstreckt.

6. Schuhwerkartikel nach Anspruch 1, wobei sich die Seitenwand (125) der Stützplatte (113) um einen Umfang eines Fersenabschnitts der Stützplatte (113) herum vertikal erstreckt.

7. Schuhwerkartikel nach Anspruch 1, wobei die Seitenwand (125) ferner eine Erhöhung (132), die sich oberhalb einer durchschnittlichen Höhe eines nicht gekerbten Abschnitts der Stützplatte (113) vertikal erstreckt, umfasst.

8. Schuhwerkartikel nach Anspruch 7, wobei die Erhöhung (132) an einer medialen Seite (130) der Stützplatte (113) angeordnet ist.

9. Schuhwerkartikel nach Anspruch 1, wobei die Zusammensetzung eine thermoplastische Matrix, umfassend ein Basisharz und ein Verstärkungsmaterial, umfasst.

10. Schuhwerkartikel nach Anspruch 9, wobei das Verstärkungsmaterial Glas- oder Kohlefaser oder eine Kombination von beiden umfasst.

11. Schuhwerkartikel nach Anspruch 9, wobei das Basisharz Polyurethan umfasst.

12. Verfahren zum Anpassen des Schuhwerkartikels nach einem der Ansprüche 1 bis 11, das Verfahren umfassend:
Aufbringen von Wärme auf den Schuhwerkartikel, um eine Temperatur der Stützplatte auf weniger als die Schmelztemperatur der Zusammensetzung der Stützplatte derart zu erhöhen, dass die Stützplatte in einem ersten Zustand nicht starr wird;
Aufbringen von Kraft auf die Stützplatte in dem ersten Zustand, um eine Form der Stützplatte anzupassen; und
Ermöglichen, dass das Schuhwerk derart abkühlt, dass sich die Stützplatte in einem zweiten Zustand, der eine höhere Starrheit als der erste Zustand aufweist, befindet.

13. Verfahren nach Anspruch 12, wobei das Anpassen des Schuhwerks auf einer Zielaktivitätsverwendung basiert.

14. Verfahren nach Anspruch 12, wobei das Anpassen des Schuhwerks auf einer Zielfußform basiert.

## Revendications

1. Article chaussant comprenant :
une semelle d'usure (7) conçue pour venir en prise avec le sol ;
une semelle intercalaire de confort (9) disposée adjacente à la semelle d'usure (7) ; et
une plaque de support (113) disposée de telle sorte que la semelle intercalaire de confort (9) est interposée entre la plaque de support (113) et la semelle d'usure (7) ;
dans lequel la plaque de support (113) comprend une paroi latérale (125) s'étendant à partir d'au moins une partie d'une périphérie d'un fond (123) de la plaque de support (113),
dans lequel la paroi latérale (125) comprend une pluralité d'encoches (127) formées à l'intérieur de celle-ci, **caractérisé en ce que**
la plaque de support (113) est formée à partir d'une composition ayant une température de fusion de 70 °C ou moins.

2. Article chaussant selon la revendication 1, dans lequel la semelle intercalaire de confort (9) comprend une ou plusieurs parties en mousse.

3. Article chaussant selon la revendication 1, dans lequel la paroi latérale (125) de la plaque de support (113) s'étend verticalement le long d'un côté médian (130) de la plaque de support (113).

4. Article chaussant selon la revendication 1, dans lequel la paroi latérale (125) de la plaque de support (113) s'étend verticalement le long d'un côté latéral (131) de la plaque de support (113).

5. Article chaussant selon la revendication 1, dans lequel la paroi latérale (125) de la plaque de support (113) s'étend verticalement le long d'un côté médian (130) et d'un côté latéral (131) de la plaque de support (113).

6. Article chaussant selon la revendication 1, dans lequel la paroi latérale (125) de la plaque de support (113) s'étend verticalement autour d'une périphérie d'une partie de talon de la plaque de support (113).

7. Article chaussant selon la revendication 1, dans lequel la paroi latérale (125) comprend en outre une arête (132) s'étendant verticalement au-dessus d'une hauteur moyenne d'une partie non entaillée de la plaque de support (113).

8. Article chaussant selon la revendication 7, dans lequel l'arête (132) est disposée sur un côté médian (130) de la plaque de support (113).

9. Article chaussant selon la revendication 1, dans lequel la composition comprend une matrice thermoplastique comprenant une résine de base et un matériau de renforcement.

10. Article chaussant selon la revendication 9, dans lequel le matériau de renforcement comprend de la fibre de verre ou de carbone, ou une combinaison des deux.

11. Article chaussant selon la revendication 9, dans lequel la résine de base comprend du polyuréthane.

12. Procédé de personnalisation de l'article chaussant selon l'une quelconque des revendications 1 à 11, le procédé comprenant :
l'application de chaleur à l'article chaussant pour élever une température de la plaque de support à un niveau inférieur à la température de fusion de la composition de la plaque de support de telle sorte que la plaque de support devienne non rigide dans un premier état ;
l'application d'une force sur la plaque de support dans le premier état pour personnaliser une forme de la plaque de support ; et
le fait de laisser la chaussure refroidir de telle sorte que la plaque de support soit dans un second état ayant une rigidité plus élevée que le premier état.

13. Procédé selon la revendication 12, dans lequel la personnalisation de la chaussure est basée sur une utilisation d'activité cible.

14. Procédé selon la revendication 12, dans lequel la personnalisation de la chaussure est basée sur une forme de pied cible.
